# NEUE EUROPÄISCHE PATENTSCHRIFT

(11) **EP 1 193 095 B2**
(45) Veröffentlichungstag und Bekanntmachung des Hinweises auf die Entscheidung über den Einspruch: **23.01.2008**
(45) Hinweis auf die Patenterteilung: 03.11.2004
(21) Anmeldenummer: 01122282.5
(22) Anmeldetag: 18.09.2001
(51) Int. Cl.: B60J 7/22, B60N 2/56, B60H 1/24

(54) **Windschutzeinrichtung für einen offenen Kraftwagen**
Windscreen device for open vehicle
Dispositif de pare-vent pour véhicule ouvert

(30) Priorität: 27.09.2000 DE 10047754
(43) Veröffentlichungstag der Anmeldung: 03.04.2002
(73) Patentinhaber: Daimler AG, 70327 Stuttgart (DE)
(72) Erfinder: Bogisch, Axel, 71120 Grafenau (DE); Fölster, Thomas, Dr., 71120 Grafenau (DE); Orizaris, Vasilios, 71272 Renningen (DE); Pfahler, Karl, Dr., 70180 Stuttgart (DE); Schrader, Jürgen, 71093 Weil im Schönbuch (DE)

(56) Entgegenhaltungen:
- DE-A- 19 908 497
- DE-C1- 19 654 370
- DE-C2- 19 846 090
- DE-U- 9 201 474
- FR-A- 2 630 056
- FR-A- 2 782 953
- JP-A- 4 158 807
- US-A- 5 137 326

## Beschreibung

Die Erfindung betrifft eine Windschutzeinrichtung mit einer Luftverteileinrichtung für einen offenen Kraftwagen nach Patentanspruch 1.

Aus der DE 196 54 370 C1 ist ein Heizsystem für Fahrzeuge, insbesondere solche mit einer offenen oder offen zu fahrenden Personenzelle bekannt. Im Bereich einer Rückenlehne eines Fahrzeugsitzes sind Lüftdüsen zum Umströmen des Kopf-, Nacken- und Schulterbereichs einer auf dem Fahrzeugsitz Platz nehmenden Person mit Warmluft vorgesehen.

Aus der DE 92 01 474 U1 ist ein Zugluftabweiser für einen offenen Kraftwagen als bekannt zu entnehmen, in dessen Fahrgastzelle zwei in einer Reihe angeordnete Fahrzeugsitze mit Rückenlehnen und zugehörigen Kopfstützen angeordnet sind. Zur Verminderung von unerwünschter Zugluft für die Fahrzeuginsassen ist im Abstand hinter den Sitzen auf Höhe des oberen Bereichs der Rückenlehne bzw. der Kopfstützen ein in Fahrzeugquerrichtung verlaufendes Rohr mit Luftausströmöffnungen vorgesehen.

Als nachteilig ist hierbei anzusehen, dass das über die annähernd gesamte Breite des Fahrzeugs verlaufende Rohr relativ sperrig innerhalb der Fahrgastzelle angeordnet ist, was z.B. bei einem Kraftwagen mit zwei Sitzreihen den Zugang zur Rücksitzbank zumindest stark erschwert. Als weiter nachteilig ist es zu betrachten, dass bei unterschiedlichen Längseinstellungen der beiden Fahrzeugsitze der Abstand zwischen den Luftausströmöffnungen und der zugeordneten Rückenlehne relativ groß wird, wodurch die erwünschte Wirkung der Windschutzeinrichtung für den Fahrzeuginsassen nicht mehr erreicht werden kann.

Aufgabe der Erfindung ist es daher, eine Windschutzeinrichtung zu schaffen, die raumsparend innerhalb der Fahrgastzelle angeordnet und bei Fahrzeugen mit mehreren Sitzreihen besser eingesetzt werden kann.

Diese Aufgabe wird erfindungsgemäß durch eine Windschutzeinrichtung mit den Merkmalen des Patentanspruchs 1 gelöst.

Vorteilhafte Ausgestaltungen der Erfindung sind in den Unteransprüchen angegeben.

Die Luftverteileinrichtung der Windschutzeinrichtung ist erfindungsgemäß in die Rückenlehne des Fahrzeugsitzes integriert, so dass beispielsweise bei einer Sitzreihe mit zwei Fahrzeugsitzen jedem der Sitze eine separate Luftverteileinrichtung zugeordnet und durch diesen getragen ist. Der Abstand zwischen den Luftausströmöffnungen und der Rückenlehne inklusive Kopfstütze bzw. dem Kopf- und Nackenbereich des Fahrzeuginsassen bleibt somit konstant, wodurch sich eine gleichbleibend gute Wirkung der Windschutzeinrichtung unabhängig von der Längseinstellung des Fahrzeugsitzes erzielen läßt. Durch die Integration der Luftverteileinrichtung in den ohnehin vorhandenen Raum der Rückenlehne wird außerdem Bauraum innerhalb der Fahrgastzelle eingespart, wobei sich die erfindungsgemäße Windschutzeinrichtung insbesondere auch bei einem Kraftwagen mit zwei Sitzreihen einsetzen läßt, ohne dass der Zugang zur Rücksitzbank erschwert ist. Dabei ist die Luftverteileinrichtung vollständig innerhalb der zugeordneten Rückenlehne angeordnet oder beispielsweise in deren rückwärtiger Lehnenverkleidung integriert.

Durch die Bereitstellung der Luftströme nahe des Kopf-, Nacken- und Schulterbereich des Fahrgastes werden die dort vorherrschenden Luftverwirbelungen wirkungsvoll vermindert, wobei die ausströmende Luft- je nach Wunsch des Fahrgastes - von einem in die Rückenlehne integrierten Heizelement erwärmt sein kann.

Durch die erfindungsgemäße Anordnung der Luftausströmöffnungen können die Luftverwirbelungen großflächig hinter dem Kopf-, Nacken- und Schulterbereich des dem Kopf-, Nacken- und Schulterbereich des Insassen kompensiert werden.

Ist der Fahrzeugsitz im oberen Bereich der Rückenlehne mit einem Bezug aus Stoff oder perforiertem Leder bezogen, so bewirkt dieser eine erwünschte, diffuse Verteilung der ausströmenden Luft im Kopf-, Nacken- und Schulterbereich des Insassen.

Ein zusätzlich in die Rückenlehne integriertes Windschott kann zur weiteren Verminderung der Luftverwirbelungen beitragen.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in
- Fig. 1: eine Seitenansicht auf einen innerhalb der Fahrgastzelle eines offenen Kraftwagens angeordneten Fahrzeugsitz mit der in die Rückenlehne integrierten Luftverteileinrichtung nach einer ersten Ausführungsform der Erfindung;
- Fig. 2: eine vergrößerte Perspektivansicht auf die Rückenlehne des Fahrzeugsitzes gemäß Fig.1;
- Fig. 3: eine Perspektivansicht auf die Rückenlehne des Fahrzeugsitzes mit der Luftverteileinrichtung nach einer zweiten Ausführungsform der Erfindung;
- Fig. 4: eine schematische Vorderansicht auf den oberen Bereich der Rückenlehne mit den Luftausströmöffnungen nach Fig.2;
- Fig. 5: eine schematische Vorderansicht auf den oberen Bereich der Rückenlehne mit den Luftausströmöffnungen der Luftverteileinrichtung nach einer dritten Ausführungsform der Erfindung;
- Fig. 6: eine Seitenansicht auf den Fahrzeugsitz mit der in die Rückenlehne integrierten Luftverteileinrichtung gemäß Fig.5 sowie mit einem ebenfalls in die Rückenlehne integrierten Windschott; und in
- Fig. 7: eine Vorderansicht auf den Fahrzeugsitz mit der Luftverteileinrichtung und dem Windschott gemäß Fig.6.

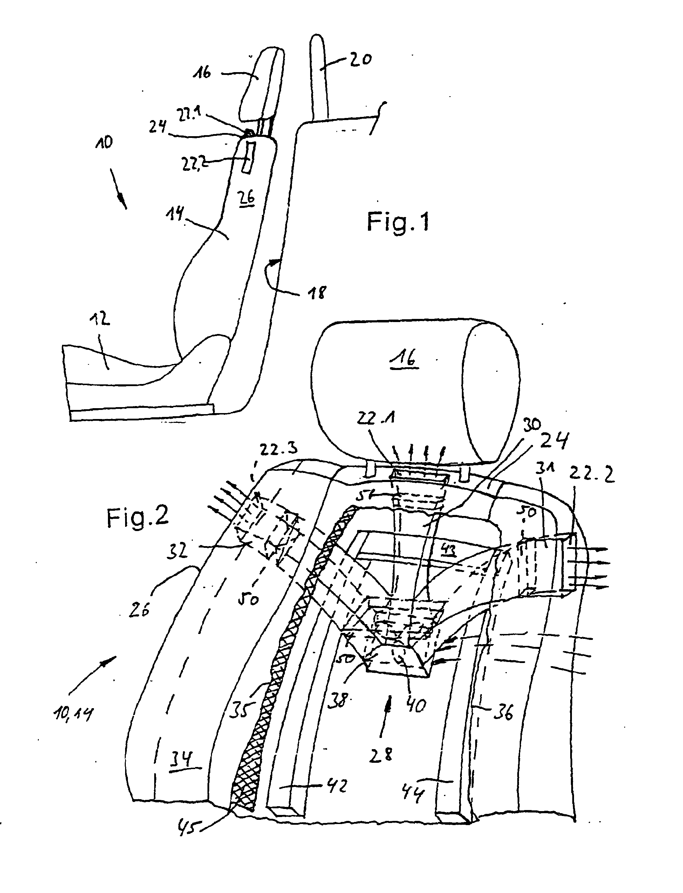

In Fig.1 ist in Seitenansicht ein innerhalb der Fahrgastzelle eines offenen, hier als Roadster ausgebildeten Kraftwagens angeordneter Fahrzeugsitz 10 dargestellt, der ein Sitzkissenteil 12, eine Rückenlehne 14 und eine dieser zugeordnete Kopfstütze 16 umfaßt. Hinter dem Fahrzeugsitz 10 ist die Hecktrennwand 18 sowie ein Überrollbügel 20 des Kraftwagens angeordnet. Von der Windschutzeinrichtung sind zwei im oberen Bereich der Rückenlehne angeordnete Luftausströmöffnungen 22.1 und 22.2 einer im weiteren noch erläuterten Luftverteileinrichtung erkennbar, wobei sich die eine Luftausströmöffnungen 22.1 für einen in Richtung der Kopfstütze 16 austretenden Luftstrom an der oberen Schmalseite 24 und die andere Luftausströmöffnungen 22.2 für einen seitlich nach außen austretenden Luftstrom an der seitlichen äußeren Schmalseite 26 der Rückenlehne 14 befindet.

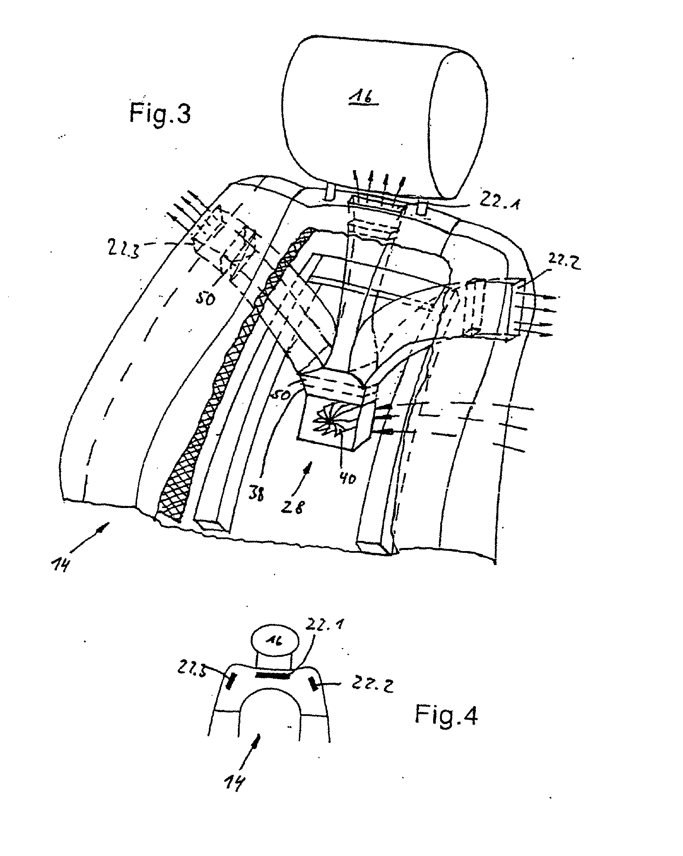

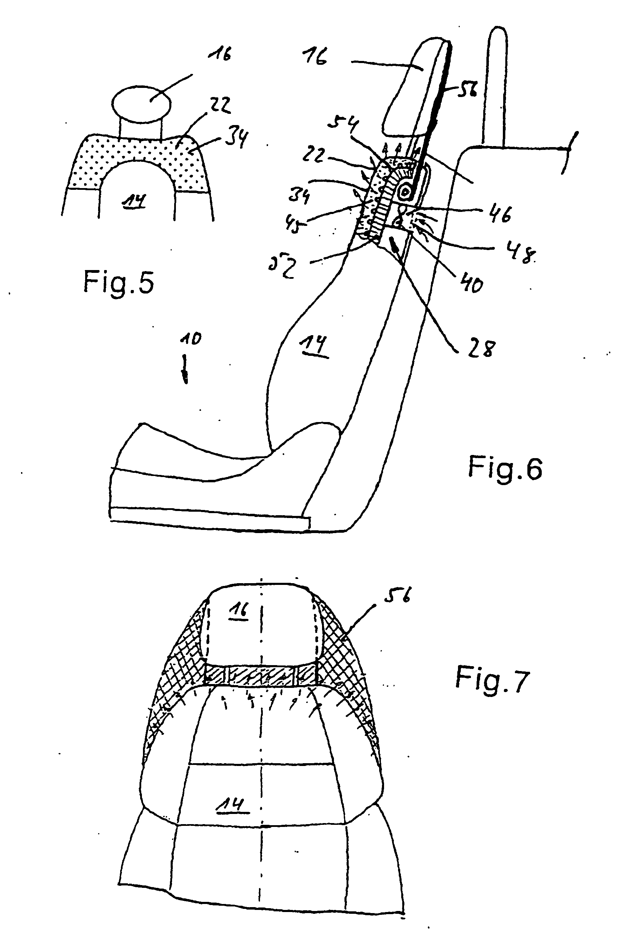

Fig.2 zeigt in vergrößerter Perspektivansicht die Rückenlehne 14 des Fahrzeugsitzes 10 gemäß Fig.1, die im mittleren Bereich zwischen zwei Bruchlinien 35,36 aufgeschnitten dargestellt ist und einen Sitzrahmen mit über ein Querjoch 43 verbundenen seitlichen Holmen 42,44 umfaßt. Unter dem Bezug 34 der Rückenlehne 14 ist deren Bepolsterung 45 angedeutet. Von den seitlichen Holmen 42,44 des Sitzrahmens ist die in die Rückenlehne 14 integrierte Luftverteileinrichtung 28 getragen, welche in dem hier gezeigten Ausführungsbeispiel drei zu den Luftausströmöffnungen 22.1,22.2 und 22.3 an den seitlich Schmalseiten 26 bzw. der oberen Schmalseite 24 der Rückenlehne 14 führende Luftkanäle 30,31,32 umfaßt. Die drei Luftkanäle 30,31,32 fußen in einem gemeinsamen Lüftergehäuse 38, das in diesem Ausführungsbeispiel ein als Axiallüfter ausgebildetes Gebläse 40 trägt. Saugseitig des Gebläses 40 ist ein in Fig.6 erkennbarer Versorgungskanal 46 vorgesehen, der bei einer Lufteinlassöffnung 48 an der Rückseite der Rückenlehne 14 endet. Bei der gezeigten Anordnung der drei Luftausströmöffnungen 22.1,22.2 und 22.3 an den seitlich Schmalseiten 26 bzw. an der oberen Schmalseite 24 der Rückenlehne 14 strömt die Luft - auch bedingt durch die Orientierung der jeweils zugeordneten Luftkanäle 30,31,32 - etwa in der Ebene der Rückenlehne 14 aus den Luftausströmöffnungen 22.1,22.2 und 22.3 aus. Jedem der Luftkanäle 30,31,32 ist hier ein einstellbares, jeweils gestrichelt dargestelltes Heizelement 50 zugeordnet, durch den die aus den Luftausströmöffnungen 22.1,22.2 und 22.3 austretenden Luftströme nach dem individuellen Wunsch des Sitzinsassen beheizbar sind. Alternativ kann innerhalb des Lüftergehäuses 38 ein gemeinsames Heizelement 50 für die Luftströme aller drei Luftkanäle 30,31,32 vorgesehen sein, welches in Fig.2 und 3 gestrichelt eingetragen ist. Neben den Heizelementen 50 könnten zusätzlich auch Verdampferelemente oder dgl. zum Kühlen der Luftströme vorgesehen werden, um beispielsweise bei offener Fahrt an heißen Tagen den Sitzinsassen mit Kühlluft zu versorgen.

In Fig.3 ist in Perspektivansicht die Rückenlehne 14 mit der Kopfstütze 16 und der Luftverteileinrichtung 28 in einer weiteren Ausführungsform dargestellt, die sich von der unter Bezugnahme auf die Figuren 1 und 2 beschriebenen Version lediglich durch eine andere Ausgestaltung des Lüftergehäuses 38 und die Verwendung eines Radiallüfters 40 unterscheidet.

In Fig.4 ist in schematischer Vorderansicht die Rückenlehne 14 mit der Luftverteileinrichtung nach den Figuren 1 bis 3 mit angedeuteten Luftausströmöffnungen 22.1,22.2 und 22.3 gezeigt, welche hier im Bereich der Sitzfläche der Rückenlehne 14 austreten.

In den Figuren 5 und 6 ist in schematischer Vorderansicht bzw. in teilweise aufgeschnittener Seitenansicht die Rückenlehne 14 des Fahrzeugsitzes 10 nach einer weiteren Ausführungsform gezeigt. Hierbei ist der Fahrzeugsitz 10 - wie in Fig.5 gepunktet angedeutet - im oberen Bereich der Rückenlehne 14 mit einem Bezug 34 aus Stoff oder perforiertem Leder bezogen, der mit einer Vielzahl von Luftausströmöffnungen 22 versehen ist. Diese Anordnung der Luftausströmöffnungen 22 bewirkt eine sehr gleichmäßige, diffuse Verteilung der Luftströme um den Kopf-, Nacken- und Schulterbereich des Sitzinsassen. In Fig.6 ist erkennbar, dass der Luftverteileinrichtung 28 hier ein dem Lüftergehäuse 38 40 nachgeschaltetes Abstandsgewirke 52 zugeordnet ist, welches für eine gute Verteilung des aus dem Gebläse 40 austretenden Luftstroms sorgt. Durch die auf dem Abstandsgewirke 52 angeordnete Bepolsterung 45 aus luftdurchlässigem Material gelangt die aus dem Gebläse 40 austretende und das Abstandsgewirke 52 durchströmende Luft zu dem Bezug 34 mit den Luftausströmöffnungen 22. Auch bei der hier beschriebenen Luftverteileinrichtung 28 können ein oder mehrere Heiz- oder Kühlelemente zum Temperieren der austretenden Luftströme vorgesehen sein. Zusätzlich sind hier zwischen dem Abstandsgewirke 52 und der Bepolsterung 45 Litzen 54 einer Sitzheizung ersichtlich.

Zur weiteren Verminderung von Luftverwirbelungen ist in den Fahrzeugsitz 10 nach Fig.6 ein Windschott 56 in die Rückenlehne 14 integriert, welches in Fig.7 in einer Vorderansicht auf den Fahrzeugsitz erkennbar ist. Dieses Windschott 56 ist hier als Rollo ausgebildet und manuell oder motorisch ausfahrbar bzw. versenkbar. In der ausgefahrenen Position kann das Windschott 56 in der hier gezeigten Version an der Rückseite der Kopfstütze 16 festgelegt werden. Zur besseren Sicht nach hinten kann das Windschott 56 durchsichtig und ggf. auch als steifes Element ausgebildet sein. Auch wäre es denkbar, die Hub- und Senkbewegungen des Windschotts 56 und der Kopfstütze 16 zu koppeln.

## Patentansprüche

1. Windschutzeinrichtung mit einer Luftverteileinrichtung (28) für einen offenen Kraftwagen, in dessen Fahrgastzelle wenigstens ein Fahrzeugsitz (10) mit Rückenlehne (14) und zugehöriger Kopfstütze (16) angeordnet ist, wobei zur Verminderung von unerwünschter Zugluft für den Fahrzeuginsassen auf Höhe des oberen Bereichs der Rückenlehne (14) Luftausströmöffnungen (22,22.1,22.2,22.3) der Luftverteileinrichtung (28) vorgesehen sind, wobei die Luftverteileinrichtung (28) vollständig in die Rückenlehne (14) des Fahrzeugsitzes (10) eines offenen Kraftwagens integriert und unmittelbar von dieser (14) getragen ist und wobei die Luftauströmöffnungen (22.1, 22.2, 22.3) an den Schmalseiten des Fahrzeugsitzes (10) angeordnet sind, so dass die Luft etwa in der Ebene der Rückenlehne (14) ausströmt.

2. Windschutzeinrichtung nach Anspruch 1,
**dadurch gekennzeichnet,**
**dass** ein der Luftverteileinrichtung (28) vorgeschaltetes Gebläse (40) in die Rückenlehne (14) integriert ist.

3. Windschutzeinrichtung nach Anspruch 1,
**dadurch gekennzeichnet,**
**dass** der Luftverteileinrichtung (28) wenigstens ein Heizelement (50) zum Erwärmen des Luftstroms zugeordnet ist.

4. Windschutzeinrichtung nach Anspruch 1,
**dadurch gekennzeichnet,**
**dass** der Fahrzeugsitz (10) zumindest im oberen Bereich der Rückenlehne (14) einen mit Luftausströmöffnungen (22) versehenen Bezug (34) aus Stoff oder perforiertem Leder aufweist, durch welchen die durch die Luftverteileinrichtung (28) bereitgestellten Luftströme austreten.

5. Windschutzeinrichtung nach Anspruch 1,
**dadurch gekennzeichnet,**
**dass** ein Windschott (56) in die Rückenlehne (14) des Fahrzeugsitzes (14) integriert und unmittelbar von dieser getragen ist.

6. Windschutzeinrichtung nach Anspruch 5,
**dadurch gekennzeichnet,**
**dass** das Windschott (56) ausfahrbar und versenkbar ist, wobei dessen Hub- und Senkbewegung an die der Kopfstütze (16) bewegungsgekoppelt ist.

7. Kraftwagen mit Windschutzeinrichtung nach Anspruch 1,
**dadurch gekennzeichnet,**
**dass** in der Fahrgastzelle des Kraftwagens wenigstens eine Sitzreihe mit zwei Fahrzeugsitzen (10) angeordnet ist, denen jeweils eine separate Luftverteileinrichtung (28) zugeordnet ist.

## Claims

1. Draught protector with an air distributor (28) for an open motor vehicle, the occupant cell of which contains at least one vehicle seat (10) with a backrest (14) and a corresponding headrest (16), wherein air outlets (22, 22.1, 22.2, 22.3) of an air distributor (28) are provided at the level of the upper region of the backrest (14) in order to reduce undesirable draughts for the occupants of the vehicle, wherein the air distributor (28) of the draught protector is completely integrated into the backrest (14) of the vehicle seat (10) of an open motor vehicle and directly supported by the backrest (14), and wherein the air outlets (22.1, 22.2, 22.3) are located on the narrow sides of the vehicle seat (10), so that the air is discharged approximately at the level of the backrest (14).

2. Draught protector according to claim 1,
**characterised in that**
a fan (40) is integrated into the backrest (14) upstream of the air distributor (28).

3. Draught protector according to claim 1,
**characterised in that**
at least one heating element (50) is assigned to the air distributor (28) to heat the airflow.

4. Draught protector according to claim 1,
**characterised in that**
at least the upper region of the backrest (14) of the vehicle seat (10) is provided with a cover (34) made of fabric or perforated leather and provided with air outlets (22) through which the airflows provided by the air distributor (28) are discharged.

5. Draught protector according to claim 1,
**characterised in that**
an anti-buffet screen (56) is integrated into the backrest (14) of the vehicle seat (14) and directly supported thereby.

6. Draught protector according to claim 5,
**characterised in that**
the anti-buffet screen (56) is extendable and retractable, its raising and lowering movement being coupled for movement with that of the headrest (16).

7. Motor vehicle with a draught protector according to claim 1,
**characterised in that**
the occupant cell of the motor vehicle contains at least one row of seats with two vehicle seats (10), to each of which a separate air distributor (28) is assigned.

## Revendications

1. Dispositif pare-vent, muni d'un dispositif distributeur d'air (28) pour un véhicule automobile ouvert, dans l'habitacle duquel est disposé au moins un siège de véhicule (10) avec un dossier (14) et un appuie-tête (16) afférent, où, pour diminuer le courant d'air, indésirable pour les passagers du véhicule, à hauteur de la zone supérieure du dossier (14) sont prévues des ouvertures de sortie d'air (22, 22.1, 22.2, 22.3) du dispositif distributeur d'air (28), le dispositif distributeur d'air (28) du dispositif pare-vent étant complètement intégré dans le dossier (14) du siège du véhicule (10) d'un véhicule automobile ouvert et est porté directement par ce dossier (14) et les ouvertures de sortie d'air (22.1, 22.2, 22.3) étant disposées sur les petits côtés du siège de véhicule (10), de telle manière que l'air s'échappe approximativement au niveau du dossier (14).

2. Dispositif pare-vent selon la revendication 1, **caractérisé en ce qu'**une soufflante (40), branchée en amont du dispositif d'air (28), est intégrée dans le dossier (14).

3. Dispositif pare-vent selon la revendication 1, **caractérisé en ce qu'**au dispositif distributeur d'air (28) est associé au moins un élément chauffant (50), pour chauffer d'écoulement d'air.

4. Dispositif pare-vent selon la revendication 1, **caractérisé en ce que** le siège de véhicule (10), présente au moins dans la zone supérieure du dossier (14), un revêtement (34), muni d'ouvertures de sortie d'air (22), et réalisé en tissu ou en cuir perforé, revêtement à travers lequel sortent les écoulements d'air fourni par le dispositif distributeur d'air (28).

5. Dispositif pare-vent selon la revendication 1, **caractérisé en ce qu'**une cloison contre le vent (56) est intégrée dans le dossier (14) du siège de véhicule (10) et est portée directement par celui-ci.

6. Dispositif pare-vent selon la revendication 5, **caractérisé en ce que** la cloison contre le vent (56) est déployable et rétractable, son mouvement de levée et d'abaissement étant couplé cinématiquement à celui de l'appuie-tête (16).

7. Véhicule automobile muni d'un dispositif pare-vent selon la revendication 1, **caractérisé en ce que**, dans l'habitacle du véhicule automobile, est disposée au moins une rangée de sièges comprenant deux sièges de véhicule (10), à chacun desquels est associé un dispositif distributeur d'air (28) séparé.
